# EUROPEAN PATENT APPLICATION

(11) **EP 4 789 906 A1**
(43) Date of publication of application: **12.08.2026**
(21) Application number: 25207519.7
(22) Date of filing: 08.10.2025
(51) Int. Cl.: B60L 55/00, B60L 1/00

(54) **CHARGING EQUIPMENT FOR ELECTRIC VEHICLE, POWER SUPPLY METHOD AND POWER SUPPLY SYSTEM USING THE SAME**

(30) Priority: 11.02.2025 CN 202510150777
(71) Applicant: Lite-On Technology Corporation, Neihu, Taipei 114 (TW)
(72) Inventor: GUO, Yuan-Kai, 114 Taipei (TW)
(74) Representative: dompatent

(57) **Abstract**

A charging equipment for an electric vehicle, a power supply method and a power supply system using the same are provided. The charging equipment for the electric vehicle includes a main control module and an auxiliary startup module. The auxiliary startup module includes a power line port and a charging protocol controller. The charging protocol controller is connected to the power line port. The charging protocol controller is used to confirm whether the power line port is connected to a DC power supply. The DC power supply provides power to the main control module through the power line port to activate the main control module, so that the electric vehicle supplies power to a power grid or a home appliance through the main control module.

## Description

### TECHNICAL FIELD

The disclosure relates in general to a charging equipment, a power supply method and a power supply system using the same, and more particularly to a charging equipment for an electric vehicle, a power supply method and a power supply system using the same.

### BACKGROUND

Electric vehicles are quiet and do not produce exhaust gas, and have been favored by many drivers. Electric vehicles need to be charged through charging equipment. In the current design, when the power grid is down, the charging equipment can only perform one-way charging of the electric vehicle, and cannot provide the reverse power supply from the electric vehicle to the power grid or home appliances.

### SUMMARY

The disclosure is directed to a charging equipment for an electric vehicle, a power supply method and a power supply system using the same. DC power is used to activate the charging device, when the power grid is down, so that the electric vehicle could still reverse power to the grid or home appliances through the charging device.

According to one embodiment, a charging equipment for an electric vehicle is provided. The charging equipment for the electric vehicle includes a main control module and an auxiliary startup module. The auxiliary startup module includes a power line port and a charging protocol controller. The charging protocol controller is connected to the power line port. The charging protocol controller is used to confirm whether the power line port is connected to a DC power supply. The DC power supply provides power to the main control module through the power line port to activate the main control module, so that the electric vehicle supplies power to a power grid or a home appliance through the main control module.

According to another embodiment, a power supply method for an electric vehicle through charging equipment is provided. The power supply method for the electric vehicle through charging equipment includes: confirming, by an auxiliary startup module, whether a power line port of the auxiliary startup module is connected to a DC power supply; providing, by the DC power supply, power to a main control module through the power line port to activate the main control module, if the power line port of the auxiliary startup module is connected to the DC power supply; and supplying, by the electric vehicle, power to a power grid or a home appliance through the main control module.

According to an alternative embodiment, a power supply system is provided. The power supply system includes an electric vehicle and a charging equipment. The charging equipment includes a main control module and an auxiliary startup module. The auxiliary startup module includes a power line port and a charging protocol controller. The charging protocol controller is connected to the power line port. The charging protocol controller is used to confirm whether the power line port is connected to a DC power supply. The DC power supply provides power to the main control module through the power line port to activate the main control module, so that the electric vehicle supplies power to a power grid or a home appliance through the main control module.

### BRIEF DESCRIPTION OF THE DRAWINGS

Figure 1 illustrates an example implementation of an electric vehicle supplying power back to the power grid or a home appliance according to this disclosure.
Figure 2 illustrates a schematic diagram of the power supply system according to an embodiment of this disclosure.
Figure 3 illustrates a flowchart of the electric vehicle supplying power through the charging equipment according to an embodiment of this disclosure.
Figure 4 illustrates a detailed flowchart of the step S120 in this embodiment.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

The technical terms used in this specification refer to the idioms in this technical field. If there are explanations or definitions for some terms in this specification, the explanation or definition of this part of the terms shall prevail. Each embodiment of the present disclosure has one or more technical features. To the extent possible, a person with ordinary skill in the art may selectively implement some or all of the technical features in any embodiment, or selectively combine some or all of the technical features in these embodiments.

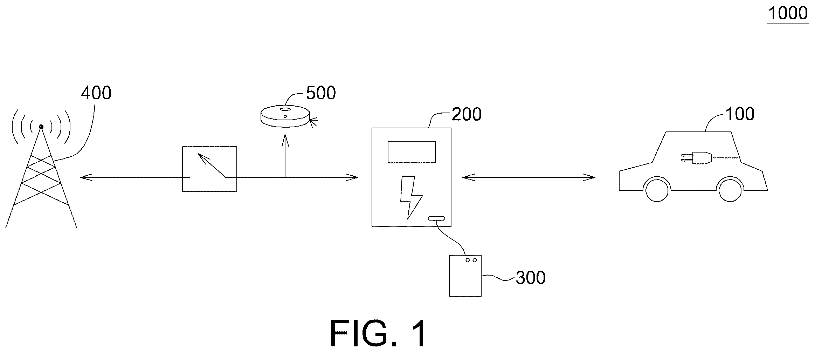

Please refer to Figure 1, which illustrates an example implementation of an electric vehicle 100 supplying power back to the power grid 400 or a home appliance 500 according to this disclosure. In this disclosure, the power supply system 1000 includes an electric vehicle 100, a charging equipment 200, a DC power supply 300, a power grid 400, and a home appliance 500. The electric vehicle 100 could be, for example, an electric car, a hybrid car, an electric bicycle, or an electric-assisted bicycle, but is not limited thereto. The charging equipment 200 could be, for example, a fixed charging pile or a fixed charging station, but is not limited thereto. The DC power supply 300 could be, for example, a mobile power bank, a rechargeable battery, or an electronic device with a discharge function, but is not limited thereto. The home appliance 500 could be, for example, a robotic vacuum cleaner, a mobile phone, a computer, an emergency lighting device, or any rechargeable electronic device, but is not limited thereto. The above examples are not restrictive.

Once the power grid 400 stops supplying power, the charging equipment 200 cannot be activated through the power grid 400. In this embodiment, the charging equipment 200 could be activated via the DC power supply 300. Then, the electric vehicle 100 could supply power to the power grid 400 via the charging equipment 200 (e.g., selling electricity back to the power company). Alternatively, the electric vehicle 100 could supply power to the home appliance 500 via the charging equipment 200. In this way, the charging equipment 200 could provide the reverse power supply function of the electric vehicle 100 to the power grid 400 or the home appliance 500. Especially when the power grid 400 is down, the disclosed technology could still activate the charging equipment 200 to achieve reverse power supply.

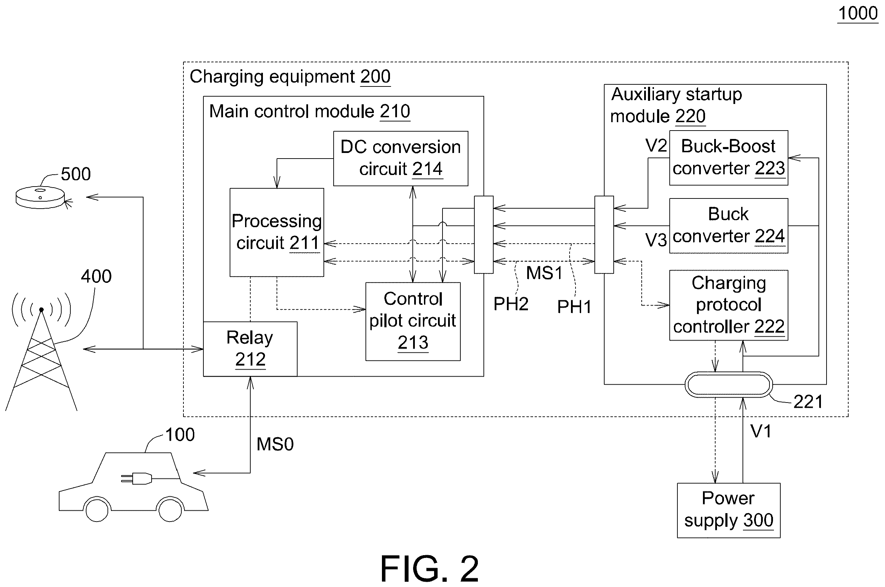

Please refer to Figure 2, which illustrates a schematic diagram of the power supply system 1000 according to an embodiment of this disclosure. The charging equipment 200 in the power supply system 1000 includes a main control module 210 and an auxiliary startup module 220. The main control module 210 is, for example, a circuit board or a system-on-chip, but is not limited thereto. The main control module 210 is used to execute a charging monitoring program. The charging monitoring program includes functions such as charge switching, current/voltage control, overcurrent protection, overvoltage protection, over-temperature protection, and leakage current protection. The auxiliary startup module 220 is, for example, a circuit board, a system-on-chip, or an external device, but is not limited thereto. The auxiliary startup module 220 is used to activate the main control module 210 through the DC power supply 300 when the power grid 400 is down.

The main control module 210 includes a processing circuit 211, a relay 212, a control pilot circuit 213, and a DC conversion circuit 214. The processing circuit 211 is used for various analysis, control, and processing operations. The relay 212, also known as an electrical relay, has a control system (also known as an input circuit) and a controlled system (also known as an output circuit). The relay 212 is an automatic switch that uses a small current to control a large current, thereby enabling functions such as automatic regulation, safety protection, and circuit conversion. The control pilot circuit 213 is connected to the processing circuit 211 and the DC conversion circuit 214. The control pilot circuit 213 is used to monitor the interaction between the electric vehicle 100 and the charging equipment and could serve as a device for determining the connection status and rated current parameters of the charging connection device.

The auxiliary startup module 220 includes a power line port 221, a charging protocol controller 222, a buck-boost converter 223, and a buck converter 224. The power line port 221 is, for example, a USB Type-C port, a USB 2.0 port, or a micro USB port, but is not limited thereto. The charging protocol controller 222 is, for example, a USB Type-C PD controller, but is not limited thereto. In this embodiment, the charging protocol controller 222 could verify whether the power line port 221 is connected to the DC power supply 300. The DC power supply 300 provides power to the main control module 210 through the power line port 221 to activate the main control module 210, enabling the electric vehicle 100 to supply power to the power grid 400 or the home appliance 500 through the main control module 210. A process flowchart is provided below to explain the operation of each component in detail.

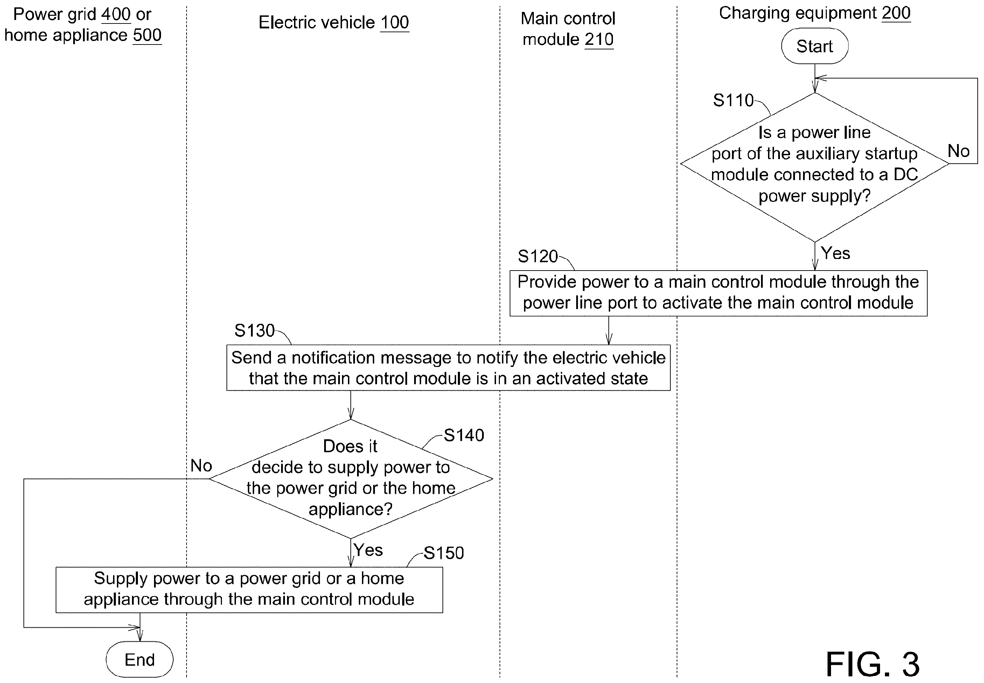

Please refer to Figure 3, which illustrates a flowchart of the electric vehicle 100 supplying power through the charging equipment 200 according to an embodiment of this disclosure. The power supply method of the electric vehicle 100 via the charging equipment 200 includes steps S110 to S150. In the step S110, as shown in the Figure 2, the charging protocol controller 222 of the auxiliary startup module 220 verifies whether the power line port 221 of the auxiliary startup module 220 is connected to the DC power supply 300. If the power line port 221 of the auxiliary startup module 220 is connected to the DC power supply 300, the process proceeds to the step S120.

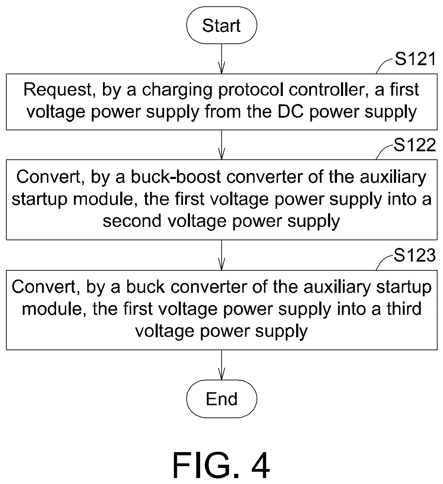

In the step S120, as shown in the Figure 2, the DC power supply 300 provides power to the main control module 210 through the power line port 221 to activate the main control module 210. Please refer to Figure 4, which illustrates a detailed flowchart of the step S120 in this embodiment. The step S120, for example, includes steps S121 to S123, but is not limited thereto.

In the step S121, as shown in the Figure 2, the charging protocol controller 222 requests a first voltage V1 from the DC power supply 300. The first voltage V1 could be, for example, 5V, 15V, 12V, 19V, or 20V, but is not limited thereto.

In the step S122, as shown in the Figure 2, the buck-boost converter 223 of the auxiliary startup module 220 converts the first voltage V1 into a second voltage V2.

In the step S123, as shown in the Figure 2, the buck converter 224 of the auxiliary startup module 220 converts the first voltage V1 into a third voltage V3. The second voltage V2 and the third voltage V3 have opposite polarity and the same magnitude. The second voltage V2 and the third voltage V3 could be, for example, +12V and -12V, but are not limited thereto.

In the step S120, as shown in the Figure 2, the auxiliary startup module 220 notifies the main control module 210 of its power source through a status communication path PH1.

Next, in the step S130, as shown in the Figure 2, the main control module 210 sends a notification message MS0 to inform the electric vehicle 100 that the main control module 210 is in an activated state.

Then, in the step S140, as shown in the Figure 2, upon receiving the notification message MS0, the electric vehicle 100 decides whether to supply power to the power grid 400 or the home appliance 500. If power supply is required, the process proceeds to step the S150.

Next, in the step S150, as shown in the Figure 2, the electric vehicle 100 supplies power to the power grid 400 or the home appliance 500 via the main control module 210. Once the electric vehicle 100 has started supplying power, the integrated bus path (I2C) PH2 of the auxiliary startup module 220 provides a stop charging notification MS1 to the auxiliary startup module 220, indicating that the DC power supply 300 is no longer needed to supply power to the main control module 210.

It will be apparent to those skilled in the art that various modifications and variations can be made to the disclosed embodiments. It is intended that the specification and examples be considered as exemplars only, with a true scope of the disclosure being indicated by the following claims and their equivalents.

## Claims

1. A charging equipment (200) for an electric vehicle (100), **characterized in that** the charging equipment (200) comprises:
a main control module (210); and
an auxiliary startup module (220), comprising:
a power line port (221); and
a charging protocol controller (222), connected to the power line port (221), wherein the charging protocol controller (222) is used to confirm whether the power line port (221) is connected to a DC power supply (300), and the DC power supply (300) provides power to the main control module (210) through the power line port (221) to activate the main control module (210), so that the electric vehicle (100) supplies power to a power grid (400) or a home appliance (500) through the main control module (210).

2. The charging equipment for the electric vehicle according to claim 1, wherein the main control module comprises:
a processing circuit;
a relay, connected to the processing circuit and used to connect to the electric vehicle;
a DC conversion circuit, connected to the processing circuit; and
a control pilot circuit, connected to the processing circuit and the DC conversion circuit.

3. The charging equipment for the electric vehicle according to claim 1, wherein the charging protocol controller is used to request a first voltage power supply from the DC power supply.

4. The charging equipment for the electric vehicle according to claim 3, wherein the auxiliary startup module further comprises:
a buck-boost converter, connected to the power line port; and
a buck converter, connected to the power line port.

5. The charging equipment for the electric vehicle according to claim 4, wherein the buck-boost converter is used to convert the first voltage power supply into a second voltage power supply, and the buck converter is used to convert the first voltage power supply into a third voltage power supply.

6. The charging equipment for the electric vehicle according to claim 5, wherein the second voltage and the third voltage have opposite polarities and equal magnitudes.

7. The charging equipment for the electric vehicle according to claim 1, further comprising:
a status communication path, connected between the main control module and the auxiliary startup module, wherein when the DC power supply provides power to the main control module through the power line port, the status communication path is used to notify the main control module that a power source of the main control module is the auxiliary startup module.

8. The charging equipment for the electric vehicle according to claim 1, further comprising:
an integrated bus path (I2C), connected between the main control module and the auxiliary startup module, wherein when the electric vehicle supplies power to the power grid or the home appliance through the main control module, the integrated bus path is used to provide a stop charging notification to the auxiliary startup module.

9. The charging equipment for the electric vehicle according to claim 1, wherein the charging equipment is a fixed charging pile and the DC power supply is a mobile power source.

10. A power supply method for an electric vehicle (100) through charging equipment (200), **characterized in that** the power supply method comprises:
(S110) confirming, by an auxiliary startup module (220), whether a power line port (221) of the auxiliary startup module (220) is connected to a DC power supply (300);
(S120) providing, by the DC power supply (300), power to a main control module (210) through the power line port (221) to activate the main control module (210), if the power line port (221) of the auxiliary startup module (220) is connected to the DC power supply (300); and
(S150) supplying, by the electric vehicle (100), power to a power grid (400) or a home appliance (500) through the main control module (210).

11. The power supply method for the electric vehicle through charging equipment according to claim 10, wherein a charging protocol controller of the auxiliary startup module confirms whether the power line port of the auxiliary startup module is connected to the DC power supply.

12. The power supply method for the electric vehicle through charging equipment according to claim 10, further comprising:
sending, by the main control module, a notification message to notify the electric vehicle that the main control module is in an activated state.

13. The power supply method for the electric vehicle through charging equipment according to claim 10, wherein the step of providing power to the main control module through the power line port comprises:
requesting, by a charging protocol controller of the auxiliary startup module, a first voltage power supply from the DC power supply.

14. The power supply method for the electric vehicle through charging equipment according to claim 13, wherein the step of providing power to the main control module through the power line port further comprises:
converting, by a buck-boost converter of the auxiliary startup module, the first voltage power supply into a second voltage power supply; and
converting, by a buck converter of the auxiliary startup module, the first voltage power supply into a third voltage power supply, wherein the second voltage and the third voltage have opposite polarities and equal magnitudes.

15. The power supply method for the electric vehicle through charging equipment according to claim 10, wherein when the DC power supply provides power to the main control module through the power line port, the auxiliary startup module notifies the main control module through a status communication path that a power source of the main control module is the auxiliary startup module.
